# EUROPÄISCHE PATENTSCHRIFT

(11) **EP 3 178 692 B1**
(45) Veröffentlichungstag und Bekanntmachung des Hinweises auf die Patenterteilung: **21.03.2018**
(21) Anmeldenummer: 16202358.4
(22) Anmeldetag: 06.12.2016
(51) Int. Cl.: B60N 2/68, B60N 2/015, B61D 33/00

(54) **TRAGSTRUKTUR FÜR FAHRZEUGSITZE**
SUPPORT STRUCTURE FOR VEHICLE SEATS
STRUCTURE PORTEUSE POUR SIÈGES DE VÉHICULE

(30) Priorität: 11.12.2015 DE 102015121643
(43) Veröffentlichungstag der Anmeldung: 14.06.2017
(73) Patentinhaber: GRAMMER AG, 92224 Amberg (DE)
(72) Erfinder: Übelacker, Roland, 92536 Pfreimd (DE); Schustjew, Sergej, 92237 Sulzbach-Rosenberg (DE); Vogl, Andreas, 93158 Teublitz (DE)
(74) Vertreter: Hannke, Christian

(56) Entgegenhaltungen:
- EP-A1- 1 864 855
- DE-A1- 19 526 840
- DE-A1- 19 736 107
- DE-U1-202014 103 167

## Beschreibung

Die Erfindung betrifft eine Tragstruktur für Fahrzeugsitze eines Fahrzeugs, bevorzugt eines Nutzfahrzeugs, zum Befestigen der Fahrzeugsitze an einer Wand einer Kabine des Fahrzeugs, wobei in einer Längsrichtung der Tragstruktur mindestens ein, bevorzugt mindestens zwei Fahrzeugsitze nebeneinander anordenbar sind.

Bei der Anordnung von Fahrzeugsitzen innerhalb einer Fahrerkabine, insbesondere von Fahrzeugsitzen in einem Nutzfahrzeug wie einem Schienenfahrzeug, ist es bisher vor allem bekannt, die Tragstruktur der Fahrzeugsitze auf dem Boden der Fahrerkabine anzuordnen beziehungsweise mit diesem zu verbinden. So weisen Fahrzeugsitze beispielsweise auf dem Boden gelagerte Stellfüße auf. Allerdings ist festzustellen, dass der Raum unter dem Fahrzeugsitz durch eine derartige Anordnung zumindest teilweise verloren geht und beispielsweise für das Deponieren von Gepäck nicht mehr zur Verfügung steht. Weiterhin ist die Reinigung der Fahrerkabine, insbesondere des Bodens, durch störende Tragstrukturteile erschwert. Ferner sind aus dem Stand der Technik bekannte Stellfüße häufig relativ groß und schwer, was die Herstellungskosten nachteilig erhöht. Aus DE 20 2014 103167 U1 ist eine Tragstruktur mit den Merkmalen des Oberbegriffs vom Patentanspruch 1 bekannt. Aufgabe der Erfindung ist es daher, eine Tragstruktur für Fahrzeugsitze in Leichtbauweise zur Verfügung zu stellen, welche hinsichtlich ihrer Anbringung innerhalb der Fahrzeugkabine möglichst wenig störend angeordnet ist.

Gelöst wird diese Aufgabe gemäß den Merkmalen des Patentanspruches 1.

Ein wesentlicher Punkt der Erfindung liegt demnach darin, dass eine Tragstruktur für Fahrzeugsitze eines Fahrzeugs, bevorzugt eines Nutzfahrzeugs, vorgesehen ist, welche zum Befestigen der Fahrzeugsitze an einer Wand einer Kabine des Fahrzeugs dient, wobei in einer Längsrichtung der Tragstruktur mindestens ein, bevorzugt mindestens zwei Fahrzeugsitze nebeneinander anordenbar sind. Erfindungsgemäß weist die Tragstruktur ein erstes Tragelement, welches an der Wand befestigbar ist, ein zweites Tragelement, welches in der Längsrichtung der Tragstruktur neben dem ersten Tragelement und starr mit diesem verbunden angeordnet ist, und ein drittes schienenartiges Tragelement, welches mit dem mindestens einen Fahrzeugsitz auf einer oberen Seite und mit dem ersten und/ oder dem zweiten Tragelement auf einer unteren Seite jeweils mittels einer lösbaren Verbindung verbunden ist, auf, wobei das erste und das zweite Tragelement als schalenartige Elemente ausgestaltet sind, welche in einem Inneren tragstrukturfrei und in Richtung zum dritten Tragelement hinweisend offen ausgestaltet sind.

Im Sinne der Erfindung wird unter dem Begriff "schalenartig" verstanden, dass das betreffende Bauteil im Wesentlichen mit einer konstanten Wanddicke und in seinem Inneren mit einem Hohlraum ausgestaltet ist. Mit anderen Worten weist das betreffende Bauteil lediglich Mantelflächen auf. Vorteilhaft ist diese Wanddicke im Gegensatz zu den Gesamtabmessungen des Bauteils gering.

Im Sinne der Erfindung wird unter dem Begriff "tragstrukturfrei" verstanden, dass beim betreffenden Abschnitt des Bauteils keine Elemente angeordnet sind, welche zur mechanischen Stabilität des Bauteils beitragen. Im Sinne der Erfindung wird unter dem Begriff "im Inneren" der schalenartigen Elemente der Abschnitt verstanden, welcher nicht durch die Schale ausgebildet wird.

Im Sinne der Erfindung wird unter dem Begriff "offen ausgestaltet" verstanden, dass das betreffende Bauteil zu der betreffenden Seite hin keine wesentlichen Elemente aufweist. So ist das erfindungsgemäße schalenartige Bauteil, welches in eine bestimmte Richtung hin offen ausgestaltet ist, diesbezüglich im Wesentlichen ohne Mantelfläche ausgestaltet, so dass Zugang zum oben erwähnten Hohlraum besteht.

Besonders bevorzugt sind das erste und das zweite Tragelement über ihre gesamte Ausdehnung in Längsrichtung der Tragstruktur in Richtung zum dritten Tragelement hinweisend offen ausgestaltet. Weiter bevorzugt sind das erste und/ oder das zweite Tragelement lediglich in diese Richtung und/ oder in einer Richtung zur Wand der Kabine hin offen ausgestaltet, so dass die restlichen Mantelflächen des ersten und/ oder des zweiten Tragelements geschlossen, also insbesondere ohne Aussparungen ausgestaltet sind.

Durch die schalenartige Ausbildung ist zunächst gewährleistet, dass das erste und das zweite Tragelement möglichst wenig Eigengewicht aufweisen. Dies erleichtert zum einen deren Montage, da die Tragelemente vorteilhaft ohne Kran oder derartige Hilfsmittel montiert werden können. Zum anderen senkt dies die Herstellungskosten.

Die starre Verbindung zwischen erstem und zweitem Tragelement sorgt für mechanische Stabilität. Die verbundenen ersten und zweiten Tragelemente können gemeinsam mit gegebenenfalls angeordneten weiteren Verbindungselementen im Rahmen der Erfindung auch als Tragbaugruppe bezeichnet werden. Denkbar ist, dass innerhalb einer Produktfamilie mehrere Varianten des zweiten Tragelements verfügbar sind, welche sich hinsichtlich ihrer Ausdehnung in Längsrichtung unterscheiden. Je nach Kundenwunsch und je nach Anzahl der auf einer einzelnen Tragstruktur anzuordnenden Fahrzeugsitze kann somit die Gesamtausdehnung der Tragbaugruppe und damit die Gesamtausdehnung der Tragstruktur in deren Längsrichtung variabel gestaltet werden, ohne die mechanische Stabilität wesentlich zu reduzieren.

Die schienenartige Ausgestaltung des dritten Tragelements sorgt dafür, dass es leicht herstellbar ist. Ferner ist sein Querschnitt vorteilhaft in Längsrichtung der Tragstruktur über die gesamte Länge des dritten Tragelements gleichbleibend ausgebildet, was die Anbindung weiterer Elemente vereinfacht. Das dritte Tragelement kann im Rahmen der Erfindung auch als Montageelement bezeichnet werden.

Die lösbare Verbindung zwischen dem dritten Tragelement und dem Fahrzeugsitz gewährleistet, dass ein schneller Austausch defekter Fahrzeugsitze oder die rasche Montage zusätzlicher Fahrzeugsitze möglich ist. Außerdem ist somit gewährleistet, dass der mindestens eine Fahrzeugsitz in Breitenrichtung der Tragstruktur und damit beispielsweise in Breitenrichtung der Kabine verschiebbar anordenbar ist. Bevorzugt ist der mindestens eine Fahrzeugsitz mit der Tragstruktur ausschließlich über das dritte Tragelement verbindbar. Weiter bevorzugt ist der mindestens eine Fahrzeugsitz so anordenbar, dass die Blickrichtung eines Sitzinsassens bei normaler Sitzhaltung der Breitenrichtung der Tragstruktur entspricht. Weiter bevorzugt weist in Längsrichtung der Tragstruktur die Länge des dritten Tragelements einen Wert auf, welcher zumindest der Breite eines, bevorzugt zweier Fahrzeugsitze entspricht.

Dass die Verbindung zwischen dem dritten Tragelement und der Tragbaugruppe lösbar ist, ist ebenfalls vorteilhaft, da so die Lagerhaltung der Tragstruktur vereinfacht wird und flexibler auf Kundenwünsche eingegangen werden kann. So können beispielsweise die oben beschriebenen Varianten der Tragbaugruppe sowie das Rohmaterial zur Herstellung des dritten Tragelements in Form von Stangenmaterial in Standardlängen auf Lager gelegt werden. Je nach Kundenwunsch kann zur Herstellung der jeweiligen Variante der erfindungsgemäßen Tragstruktur das Stangenmaterial abgelängt und mit der passenden Tragbaugruppe verbunden werden.

Bevorzugt ist eine Tragstruktur ausgebildet, deren Verbindungsabschnitte zur Wand der Kabine in Höhenrichtung der Tragstruktur betrachtet ausschließlich unterhalb der Fahrzeugsitze und/ oder unterhalb des dritten Tragelements angeordnet sind. Bevorzugt ist in Höhenrichtung der Tragstruktur betrachtet der unterste Verbindungsabschnitt zur Wand unterhalb des unteren Endes des zweiten Tragelements angeordnet. Unter "Verbindungsabschnitte" sind die Abschnitte der Tragstruktur zu verstehen, die zur Befestigung an der Kabinenwand mit dieser zumindest teilweise kontaktierend ausgebildet sind.

Aufgrund der guten mechanischen Eigenschaften hat es sich in der Praxis als vorteilhaft herausgestellt, wenn das erste und das zweite Tragelement jeweils ein gekantetes Stahlblechelement, bevorzugt aus einem hochfesten Stahl, umfassen. Weiter bevorzugt weist eine Dicke dieser Stahlblechelemente einen Wert aus einem Bereich von 0,8 mm bis 6 mm, weiter bevorzugt aus einem Bereich von 1 mm bis 3 mm, meist bevorzugt von 1,5 mm auf.

Denkbar wäre ebenfalls, dass für die Ausgestaltung des ersten, zweiten und/ oder dritten Tragelements und/ oder der restlichen Elemente der Tragbaugruppe zumindest ein Werkstoff verwendet wird, welcher zumindest einen Kunststoff und/ oder einen Werkstoff aus der Gruppe der carbonfaserverstärkten Kunststoffe (CFK) und/ oder der glasfaserverstärkten Kunststoffe (GFK) umfasst.

Ebenfalls denkbar wäre es, mindestens eines der oben genannten Elemente aus einer GFK-CFK-Laminierung zu gestalten; d.h. das dieses Element ein mit einem GFK-Teil zusammenlaminiertes CFK-Teil umfasst. Alternativ könnte mindestens eines der oben genannten Elemente als GFK-Teil und mindestens ein weiteres als CFK-Teil ausgestaltet sein, wobei die Elemente dann zusammenlaminiert vorliegen.

Auch denkbar wäre, dass die oben genannten Elemente einen Aluminiumgusswerkstoff umfassen. Weiterhin können sämtliche genannten Materialien (insbesondere Stahl, Kunststoff, GFK, CFK, Aluminiumguss, Aluminiumverbindung) in Kombination miteinander verwendet werden, sofern die verwendete Materialpaarung nicht zu unerwünschten thermischen oder mechanischen Spannungen führt.

Weiter bevorzugt sind das erste, das zweite und das dritte Tragelement jeweils einstückig ausgebildet.

Die schalenartige Ausgestaltung ist somit bei aus dem Stand der Technik bekannten gekanteten Blechteilen gewährleistet. Gekantete Blechteile werden hergestellt, indem ein Zuschnitt aus einer Blechtafel zwischen ein Oberwerkzeug (auch "Stempel" genannt) und ein Unterwerkzeug (auch "Matrize" genannt) einer Abkantpresse gelegt wird. Der Stempel wird kontrolliert in die Matrize gedrückt, wodurch beispielsweise Winkel und Radien beim Zuschnitt erzeugt werden können.

Die Ausgestaltung des ersten und des zweiten Tragelements mittels gekanteter Blechteile ist bezüglich der Herstellkosten vergleichsweise günstig, da diese aus lediglich einem Teil, nämlich der Blechtafel, gefertigt werden können.

Um das Verhältnis von Eigenmasse zu Eigensteifigkeit des dritten Tragelements (Montagelement) zu optimieren, hat es sich als vorteilhaft herausgestellt, wenn das dritte Tragelement ein Strangpressprofil, bevorzugt aus einer Aluminiumverbindung, umfasst. Diese Profile sind in nahezu jedem beliebigen Querschnitt herstellbar und weisen vorteilhaft - trotz geringerer Festigkeit des Werkstoffs - optimale mechanische Eigenschaften auf. Beispielsweise weist die verwendete Aluminiumverbindung neben Aluminium die Elemente Magnesium, Blei, Kupfer, und/ oder Silizium auf.

Weitere vorteilhafte Varianten zur Ausgestaltung sehen vor, dass das dritte Tragelement mindestens ein Profil oder eine Kombination von mindestens zwei Profilen umfasst, welche einen zumindest im Wesentlichen kreisförmigen, rohrförmigen, rechteckförmigen, quadratischen oder rautenförmigen Querschnitt aufweisen.

Denkbar wäre ferner, dass das dritte Tragelement ein Stahlrohr mit oder ohne eingearbeiteten und/oder eingebauten Verbindungsstegen umfasst. Ferner wäre es möglich, dass das dritte Tragelement eine Kombination aus gekanteten Blechen, welche eine Aluminiumverbindung oder einen Stahlwerkstoff umfassen, aufweist, beispielsweise in Form einer Schweißbaugruppe.

Möglich wäre es ebenfalls, ein Profil herzustellen, welches ein Hybridprofil darstellt und beispielsweise bereits beim Herstellverfahren aus mindestens zwei verschiedenen Werkstoffen, beispielsweise mittels Strangpressen, erzeugbar ist. Ebenfalls wäre es möglich, ein Hybridprofil zu erzeugen, welches nach deren Fertigung miteinander verbundene Einzelprofile aus unterschiedlichen Werkstoffen umfasst. Als Werkstoffe kommen die oben genannten in Frage.

Um die starre Verbindung zwischen erstem und zweitem Tragelement zu gewährleisten, sind mehrere Varianten denkbar. Zum einen könnten diese mittels geeigneter Montagebohrungen und -laschen miteinander verschraubt oder vernietet sein. In der Praxis hat es sich neben diesen Möglichkeiten als vorteilhaft herausgestellt, wenn das erste und das zweite Tragelement mittels mindestens einer Schweißverbindung und eines ersten Verbindungselements, bevorzugt in Form eines Stahlblechelements, miteinander verbunden sind. Dies sorgt für die notwendige mechanische Stabilität. Ferner können so beispielsweise fertig geschweißte Tragbaugruppen, in diesem Fall bestehend aus erstem Tragelement, zweitem Tragelement und erstem Verbindungselement, mit einer einheitlichen Farbgestaltung durch Lackieren oder Pulverbeschichten versehen werden. Durch die höhere mechanische Stabilität der Tragbaugruppe in Bezug auf ihre Einzelelemente ist es außerdem einfacher und platzsparender, die gesamte Tragbaugruppe auf Lager zu legen.

Bevorzugt umfasst die Tragbaugruppe mindestens drei und höchstens fünf Elemente, wobei hier die Elemente als einzelne einstückig ausgebildete Bauteile zu verstehen sind.

Gemäß einer weiteren bevorzugten Ausführungsform ist es vorgesehen, dass das erste, das zweite und/ oder das dritte Tragelement bezüglich einer Ebene, welche durch die Längsrichtung und die Höhenrichtung der Tragstruktur aufgespannt ist, spiegelsymmetrisch ausgestaltet sind.

Dies hat mehrere Vorteile. Zum einen ist die Herstellung der ersten und zweiten Tragelemente mittels Kanten intuitiver durchführbar; es lassen sich insbesondere Abweichungen zwischen Soll- und Istmaßen durch Vergleich der beiden symmetrischen Hälften leichter feststellen. Auch die Herstellung des dritten Tragelements bzw. die Herstellung der formgebenden Matrize ist vereinfacht.

Zum anderen können natürlich die ersten bis dritten Tragelemente und damit die gesamte Tragstruktur sowohl zur Befestigung an einer ersten Wand als auch an einer zweiten, der ersten gegenüberliegenden Wand der Kabine des Fahrzeugs verwendet werden, ohne dass hier Abweichungen vorhanden oder andere Montageelemente notwendig wären. Lediglich die Fahrzeugsitze müssten jeweils um 180° gedreht werden, um sie in Fahrtrichtung zu montieren. Auch durch diese Ausgestaltung ist also gewährleistet, dass durch Reduzierung der Variantenvielfalt die Lagerhaltung der Tragstruktur möglichst vereinfacht wird.

Schließlich ist durch die symmetrische Gestaltung ebenfalls gewährleistet, dass der Verlauf der mechanischen Eigenschaften der beiden symmetrischen Hälften der Tragstruktur ebenfalls identisch bzw. symmetrisch zur genannten Ebene ausgestaltet sind, was die Berechnung der Lagerreaktionen der Tragstruktur vereinfacht.

Weiterhin vorteilhaft ist es, wenn die lösbaren Verbindungen des dritten Tragelements jeweils mittels einer Verbindung aus am dritten Tragelement angeordneten Nuten und an dem mindestens einen Fahrzeugsitz und/ oder dem ersten und zweiten Tragelement angeordneten zweiten Verbindungselementen ausgestaltet sind.

Die Nuten am dritten Tragelement können so vorteilhaft bereits bei dessen Herstellung, beispielsweise mittels Strangpressen, eingearbeitet werden, ohne dass am fertigen dritten Tragelement mit Materialverschnitt verbundene Nacharbeiten notwendig sind.

Beispielsweise sind die zweiten Verbindungselemente mittels Hammerkopfschrauben ausgestaltet. Diese weisen im Gegensatz zum sechseckig geformten Schraubenkopf einer gewöhnlichen Sechskantschraube einen im Wesentlichen rechteckigen Schraubenkopf auf. Sind die Hammerkopfschrauben also beispielsweise an der Unterseite des Fahrzeugsitzes bis zu einer definierten Tiefe eingeschraubt, so können zur Montage des Fahrzeugsitzes auf der Tragstruktur die Schraubenköpfe entweder von der Seite her, also in Längsrichtung der Tragstruktur, oder von oben bzw. von unten, also in Höhenrichtung der Tragstruktur, in die Nuten des dritten Tragelements eingeführt, gegebenenfalls der Schraubenkopf gedreht und der Fahrzeugsitz in Längsrichtung der Tragstruktur bis zu seiner gewünschten Position verschoben werden.

Die definierte Tiefe wird beispielsweise so gewählt, dass zwischen Unterseite des Fahrzeugsitzes und Beginn des Schraubenkopfes ein Abstand verbleibt, der mindestens der Wanddicke der um die Nut angeordneten Wand entspricht. Besonders vorteilhaft ist es, wenn eine Scheibe und/ oder eine Mutter außerhalb der Nut an der Hammerkopfschraube angeordnet ist. Mittels Festziehen dieser Elemente ("Kontern") lässt sich die Position der Hammerkopfschraube und damit vorliegend die Position der Fahrzeugsitze entlang der Längserstreckung des dritten Tragelements festlegen.

Dabei kann die gewünschte Position des Fahrzeugsitzes beispielsweise auch durch in die Nuten einlegbare und hinsichtlich ihrer Länge vorbestimmbare Stoppelemente definiert werden. Weitere Möglichkeiten der Positionsbestimmung sind entsprechend am dritten Tragelement angeordnete Rastnasen, Aussparungen, Gewinde etc.

Gemäß einer weiteren bevorzugten Ausführungsform hat es sich bewährt, wenn in Richtung der Längserstreckung der Tragstruktur ein Verlauf einer unteren Seite des ersten Tragelements zumindest abschnittsweise einem Verlauf einer ersten Gerade mit einer ersten Steigung und/ oder ein Verlauf einer unteren Seite des zweiten Tragelements einem Verlauf einer zweiten Gerade mit einer zweiten Steigung entspricht, wobei die erste Steigung größer als die zweite Steigung ist. Bevorzugt weist die erste Steigung einen Wert aus einem Bereich von 0,8 bis 1,2, bevorzugt von 1 auf. Weiter bevorzugt weist die zweite Steigung einen Wert aus einem Bereich von 0,05 bis 0,2, bevorzugt von 0,1 auf.

Durch diese Ausgestaltung ist gewährleistet, dass am ersten und/ oder am zweiten Tragelement gerade verlaufende Kanten angeordnet sind, welche mittels Abkanten wie oben beschrieben einfach herstellbar sind. Mit der oben beschriebenen Ausgestaltung geht auch einher, dass in Längsrichtung der Tragstruktur eine Querschnittsfläche der Tragstruktur zumindest ab dem zweiten Montagelement in Richtung vom ersten zum zweiten Tragelement hin sich verkleinernd ausgebildet ist.

Zur Einschätzung der mechanischen Lagerreaktionen innerhalb der Tragstruktur kann angenommen werden, dass deren mechanische Eigenschaften im Wesentlichen denen eines Kragträgers (auch: Kragbalken oder Kragarm oder Cantilever genannt) entsprechen. Dieser Kragträger ist ein einseitig gelagerter, waagerechter Balken, an dem eine Last hängt, also ein Träger, der nur ein Auflager hat. Als Balken ist seine Länge vorteilhaft deutlich größer als seine Höhe und die Breite. Das Auflager ist vorteilhaft eine Einspannung, bei der alle sechs Freiheitsgrade fixiert sind, und wird daher im Folgenden als feste Einspannung bezeichnet.

Im vorliegenden Fall muss der Kragträger in der Lage sein, sowohl seine Eigenmasse als auch die jeweiligen Massen der Fahrzeugsitze (und der Passagiere) aufzunehmen. Die vorhandenen Massen können vereinfacht als eine in Längsrichtung des Kragträgers (also in Längsrichtung der Tragstruktur) gleichmäßig verteilte Streckenlast angenommen werden.

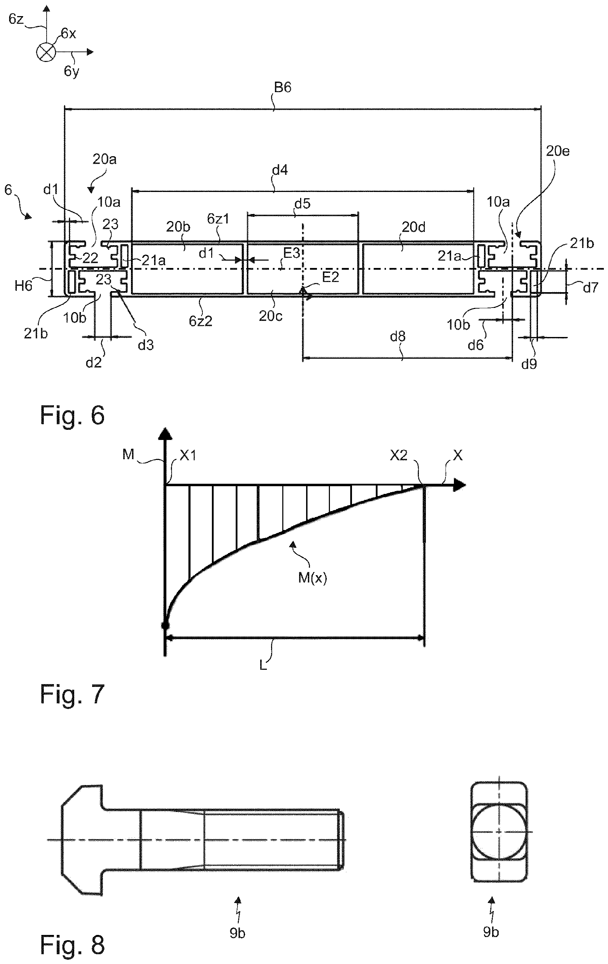

Damit ergibt sich ein Biegemomentverlauf über die Länge des Kragträgers, welcher mittels der aus dem Stand der Technik bekannten vorliegenden Fig. 7 abgebildet ist. Die beschriebene Ausgestaltung der unteren Seiten des ersten und/ oder des zweiten Tragelements mit erster und zweiter Steigung ist also optimal an den tatsächlich vorhandenen Verlauf des Biegemoments angepasst.

Gemäß einer weiterhin bevorzugten Variante hat es sich als vorteilhaft herausgestellt, wenn in Höhenrichtung der Tragstruktur das erste und das zweite Tragelement von unten nach oben sich verbreiternd ausgestaltet sind. Damit ist gewährleistet, dass eine ausreichend breite Auflagefläche für die Anbindung der Fahrzeugsitze an der oberen Seite der Tragbaugruppe vorhanden ist. Diese sorgt für mechanische Stabilität im normalen Belastungsfall, nämlich dann, wenn ein Passagier auf dem Fahrzeugsitz Platz nimmt und sich mit dem Fahrzeug mit konstanter Geschwindigkeit bewegt. Treten jedoch hohe Belastungen wie beispielsweise bei einem Unfall auf, sorgt auch hier die breite Auflagefläche für eine Reduzierung der auftretenden Kräfte und Momente und eine Verringerung der Rückverlagerung des Fahrzeugsitzes in Breitenrichtung der Tragstruktur.

Um möglichst viel Platz im Fußraum bereitzustellen, ist die jeweilige Ausdehnung des ersten und des zweiten Tragelements in Breitenrichtung an der unteren Seite der Tragstruktur entsprechend geringer ausgestaltet.

Um Spannungsspitzen zu vermeiden bzw. Kerbwirkungen zu reduzieren, hat es sich als vorteilhaft herausgestellt, wenn zwischen dem ersten und dem zweiten Tragelement ein erster Übergang in Längsrichtung und/ oder ein zweiter Übergang in einer Breitenrichtung der Tragstruktur stetig ausgebildet sind.

Diese Übergänge sind bevorzugt in Längsrichtung der Tragstruktur zwischen einem ersten Ende und einem zweiten Ende eines ersten Fahrzeugsitzes, welcher am nächsten zur Wand der Kabine angeordnet ist, angeordnet. Bevorzugt ist das in Längsrichtung der Tragstruktur von der Wand der Kabine entfernt gelegene Ende der Tragstruktur, welches beispielsweise mittels des zweiten Tragelements ausgebildet ist, zwischen einem ersten Ende und einem zweiten Ende eines zweiten Fahrzeugsitzes, welcher in Längsrichtung der Tragstruktur neben dem ersten Fahrzeugsitz und weiter beabstandet zur Wand der Kabine angeordnet ist, angeordnet.

Die Verbindung des ersten Tragelements mit der Wand der Kabine kann unmittelbar erfolgen, indem beispielsweise das erste Tragelement Montagelaschen mit dazugehörigen Bohrungen als Verbindungsabschnitte und die Wand der Kabine Gewindebohrungen aufweisen, so dass die Befestigung mittels Schrauben und einer gewöhnlichen Schraubverbindung erfolgen kann; alternativ könnten Schweißbolzen an der Wand angeordnet sein, wobei das erste Tragelement mittels den Bohrungen und Muttern befestigt würde.

Eine andere Variante sieht vor, dass die Verbindung des ersten Tragelements mit der Wand der Kabine mittelbar erfolgt. Es hat sich insbesondere als vorteilhaft herausgestellt, wenn mit dem ersten Tragelement mindestens zwei Montagelaschenelemente starr verbunden angeordnet sind, welche mit der Wand verbindbar sind. Diese Montagelaschenelemente sind vorteilhaft mittels einer Schweißverbindung mit dem ersten Tragelement verbunden und bilden die Verbindungsabschnitte zur Wand aus. Dementsprechend sind sie Bestandteile der Tragbaugruppe. Besonders bevorzugt sind die Montagelaschenelemente mittels gekanteter Stahlblechteile ausgestaltet; weiter bevorzugt weisen diese die gleiche Dicke und/ oder das gleiche Material auf wie das erste und/ oder das zweite Tragelement; weiter bevorzugt sind die Montagelaschenelemente als gekantete Stahlblechteile mindestens einmal, bevorzugt mindestens zweimal gekantet ausgebildet.

Die Tragbaugruppe kann gemäß weiteren bevorzugten Ausführungsformen entweder starr und lösbar oder unlösbar mit der Wand verbunden sein - beispielsweise verschraubt, genietet oder verschweißt - oder beweglich zur Wand mit dieser verbunden sein - beispielsweise um eine vertikale Achse verschwenkbar oder in Höhenrichtung verlagerbar und/ oder arretierbar. Damit kann die Tragbaugruppe je nach Platzverhältnissen beispielsweise höhenverstellt und/ oder unter Ausbildung eines Winkels zur Wand der Kabine angeordnet werden.

Besonders vorteilhaft ist es weiterhin, wenn Montagebohrungen an den Montagelaschenelementen in Breitenrichtung der Tragstruktur außerhalb von Mantelflächen des ersten Tragelements angeordnet sind. Somit sind die einzelnen Verbindungspunkte zwischen der Wand der Kabine und der Tragstruktur möglichst weit voneinander entfernt, was einerseits die Zugänglichkeit erleichtert und andererseits die mechanische Stabilität der an der Wand angeordneten Tragstruktur erhöht. Bevorzugt sind weiterhin Montagebohrungen des oberen Montageelements weiter voneinander beabstandet als Montagebohrungen des unteren Montageelements.

Vorteile und Zweckmäßigkeiten sind der nachfolgenden Beschreibung in Verbindung mit der Zeichnung zu entnehmen.

Es zeigen:
- Fig. 1: in einer perspektivischen Darstellung eine erfindungsgemäße Tragstruktur mit montierten Fahrzeugsitzen;
- Fig. 2: eine Explosionsdarstellung der Tragstruktur mit montierten Fahrzeugsitzen aus Figur 1;
- Fig. 3a-3d: Normansichten der Tragstruktur mit montierten Fahrzeugsitzen aus Figur 1;
- Fig. 4: in einer perspektivischen Darstellung die Tragstruktur aus Figur 1 ohne Fahrzeugsitze;
- Fig. 5: in einer weiteren perspektivischen Darstellung die Tragstruktur aus Figur 1 ohne Fahrzeugsitze;
- Fig. 6: eine Querschnittsansicht einer bevorzugten Ausführungsform des dritten Tragelements;
- Fig. 7: einen Biegemomentenverlauf eines Kragträgers;
- Fig. 8: eine bevorzugte Ausführungsform des zweiten Verbindungselements;
- Fig. 9: einen Querschnitt durch die Tragstruktur aus Figur 1 ohne Fahrzeugsitze.

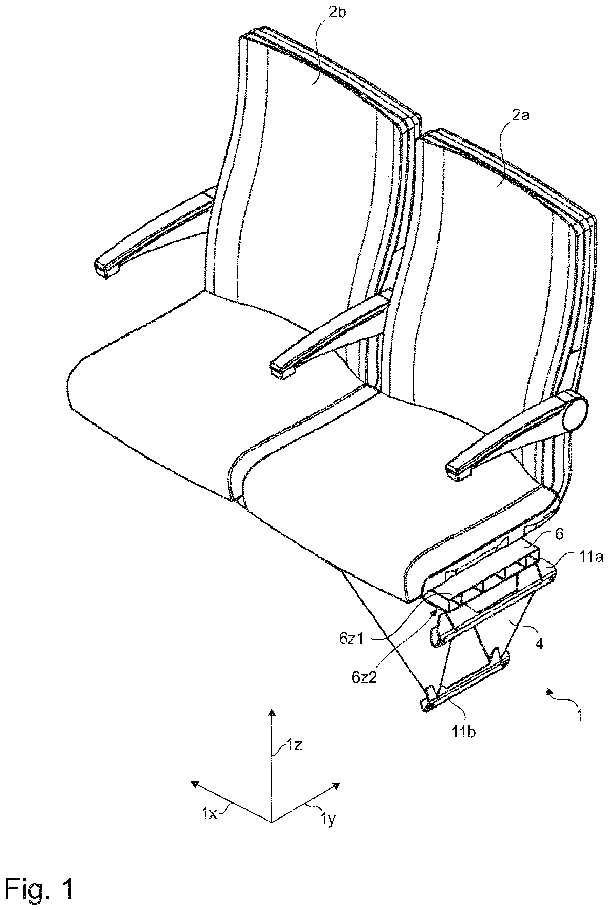

In Fig. 1 ist in einer perspektivischen Darstellung eine erfindungsgemäße Tragstruktur 1 für Fahrzeugsitze 2a, 2b eines Fahrzeugs mit zwei montierten Fahrzeugsitzen 2a, 2b gezeigt. Zumindest teilweise zu sehen ist ein erstes Tragelement 4, mit dessen oberem Ende ein erstes Montagelaschenelement 11a und mit dessen unterem Ende ein zweites Montagelaschenelement 11b starr verbunden angeordnet ist.

Ebenfalls nur teilweise zu sehen ist ein drittes schienenartiges Tragelement 6, welches mit den beiden Fahrzeugsitzen 2a, 2b auf einer oberen Seite 6z1 und mit dem ersten Tragelement 4 auf einer unteren Seite 6z2 jeweils verbunden angeordnet ist.

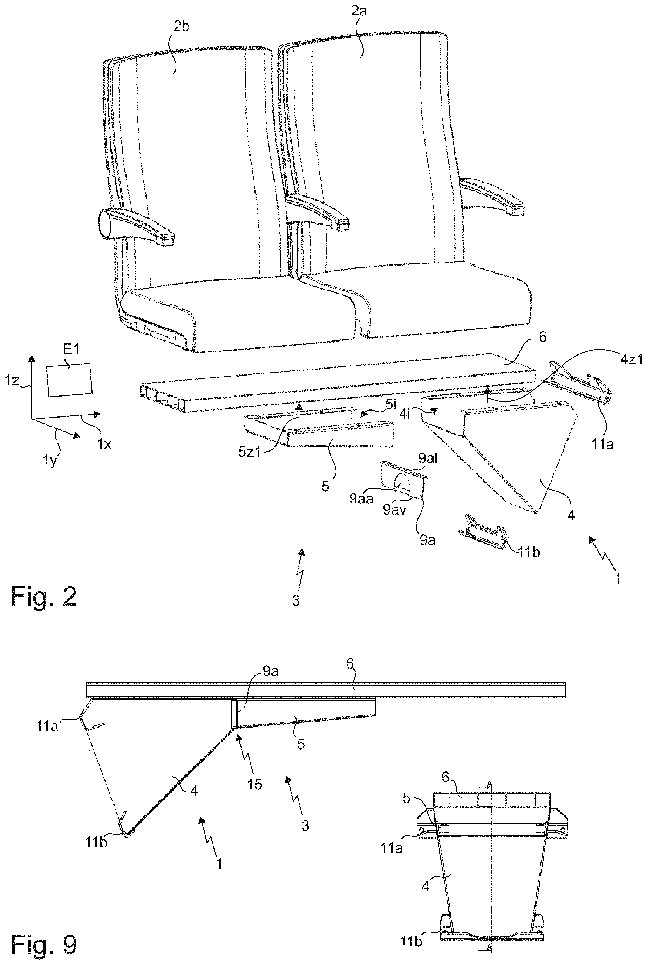

Gemäß Fig. 2 ist eine Explosionsdarstellung der Tragstruktur 1 mit montierten Fahrzeugsitzen 2a, 2b aus Figur 1 gezeigt, wobei hier neben erstem Tragelement 4 und drittem Tragelement 6 auch ein zweites Tragelement 5 zu sehen ist, welches in einer Längsrichtung 1x der Tragstruktur 1 neben dem ersten Tragelement 4 und starr mit diesem verbunden angeordnet ist.

Das erste Tragelement 4 ist an einer nicht dargestellten Wand einer Kabine eines Fahrzeugs befestigbar. Zusammen mit einem ersten Verbindungselement 9a in Form eines Blechteils ist es mit dem zweiten Tragelement 5 verschweißt.

Ebenfalls verschweißt mit dem ersten Tragelement 4 sind die Montagelaschenelemente 11a, 11b, welche hierfür jeweils zwei Aussparungen aufweisen, deren Breite mindestens dem Wert einer Blechdicke des ersten Tragelements 4 entspricht. Somit ist eine Tragbaugruppe 3 gebildet, welche als Schweißbaugruppe ausgestaltet ist und vorliegend das erste Tragelement 4, das zweite Tragelement 5, das erste Verbindungselement 9a sowie die beiden Montagelaschenelemente 11a, 11b umfasst.

Vorliegend ist das erste Verbindungselement 9a im Wesentlichen rechteckförmig ausgestaltet, wobei an einem oberen Ende des ersten Verbindungselements 9a eine gekantete Lasche 9al zur Verbindung mit dem ersten Tragelement 4 und an einem unteren Ende zwei Vorsprünge 9av zur Verbindung mit entsprechenden rechteckförmigen Aussparungen im ersten Tragelement 5 angeordnet sind. Ebenfalls weist das erste Verbindungselement 9a eine halbkreisförmige Aussparung 9aa auf, welche der Gewichtsreduktion und/ oder beispielsweise zur Aufhängung beim Pulverbeschichten dient.

Das erste Verbindungselement 9a ist innerhalb der Tragbaugruppe 3 so angeordnet, dass seine im Wesentlichen rechteckförmige Mantelfläche, auf der die Aussparung 9aa angeordnet ist, senkrecht zur Ausrichtung der gekanteten Lasche 9al und senkrecht zur Längsrichtung 1x der Tragstruktur 1 angeordnet ist. Diese Anordnung ermöglicht somit eine effektive Versteifung der Tragbaugruppe 3 und reduziert Torsionsspannungen innerhalb der Tragbaugruppe 3.

Das erste 4 und das zweite Tragelement 5 sind vorliegend mittels schalenartiger Elemente aus gekanteten Blechteilen ausgestaltet, wobei die schalenartigen Elemente in einem Inneren 4i, 5i tragstrukturfrei und in Richtung 4z1, 5z1 zum dritten Tragelement 6 hinweisend offen ausgestaltet sind.

Das dritte Tragelement 6 ist in allen Figuren bis auf die Figur 6 vereinfacht und insbesondere ohne Nuten 10a, 10b (siehe Fig. 6) dargestellt.

Vorliegend umfassen das erste 4 und das zweite Tragelement 5 jeweils ein gekantetes Stahlblechelement aus einem hochfesten Stahl und das dritte Tragelement 6 ein Strangpressprofil aus einer Aluminiumverbindung.

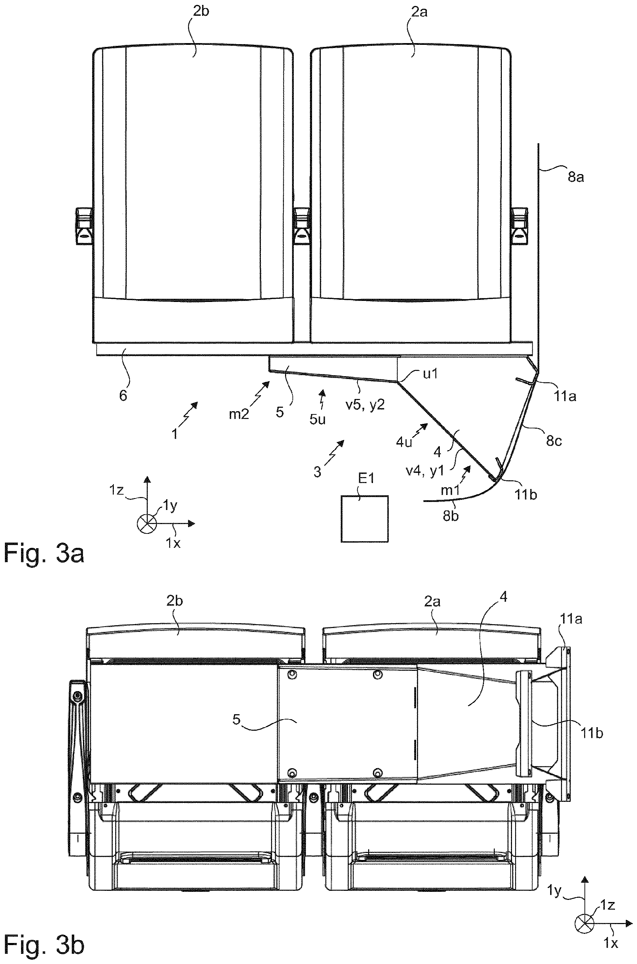

Das erste 4, das zweite 5 und das dritte Tragelement 6 sind vorliegend bezüglich einer Ebene E1 (siehe auch Fig. 3a), welche durch die Längsrichtung 1x und eine Höhenrichtung 1z der Tragstruktur 1 aufgespannt ist, spiegelsymmetrisch ausgestaltet. Dies geht auch aus den Normansichten gemäß den Figuren 3a-3d hervor. Ebenfalls gilt die Spiegelsymmetrie vorliegend für das erste Verbindungselement 9a sowie für die beiden Montagelaschenelemente 11a, 11b. Somit ist die gesamte Tragbaugruppe 3 spiegelsymmetrisch zur Ebene E1 ausgestaltet.

Gemäß Fig. 3a ist gezeigt, dass in Richtung der Längserstreckung 1x der Tragstruktur 1 ein Verlauf v4 einer unteren Seite 4u des ersten Tragelements 4 zumindest teilweise einem Verlauf einer ersten Gerade y1 mit einer ersten Steigung m1 und ein Verlauf v5 einer unteren Seite 5u des zweiten Tragelements 5 einem Verlauf einer zweiten Gerade y2 mit einer zweiten Steigung m2 entspricht, wobei die erste Steigung m1 größer als die zweite Steigung m2 ist.

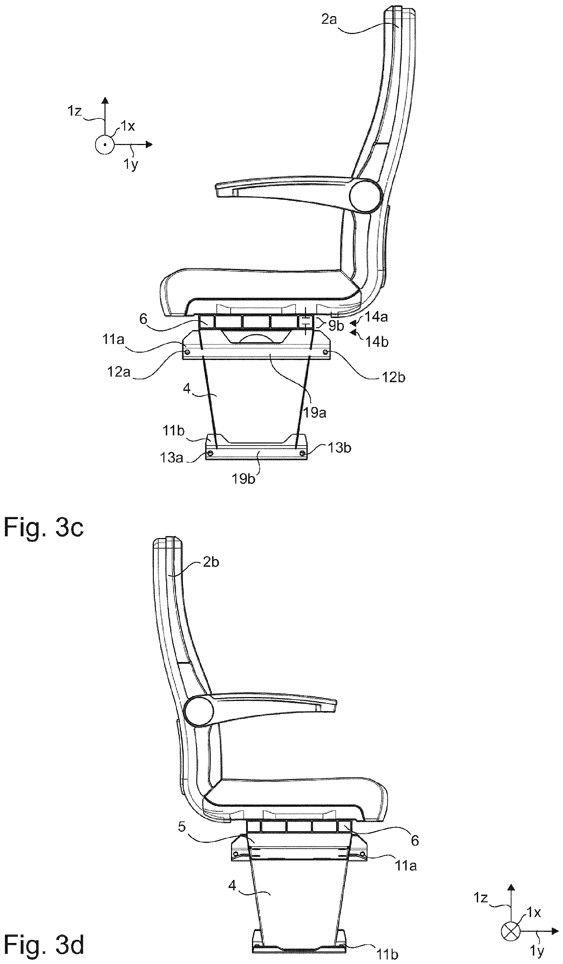

Angedeutet ist mittels Fig. 3a eine Wand 8a der Kabine des Fahrzeugs, mit der die zwei Montagelaschenelemente 11a, 11b verbunden sind. Dazu weisen die Montagelaschenelemente 11a, 11b jeweils zwei Montagebohrungen 12a, 12b, 13a, 13b auf (siehe auch Fig. 3c), welche in Breitenrichtung 1y der Tragstruktur 1 außerhalb von Mantelflächen 18a, 18b des ersten Tragelements 4 und auf Kontaktflächen 19a, 19b der Montagelaschenelemente 11a, 11b angeordnet sind. Dabei sind insbesondere die Mantelflächen 18a, 18b gemeint, die das erste Tragelement 4 in Breitenrichtung 1y der Tragstruktur 1 begrenzen.

Hierbei ist zu berücksichtigen, dass die Wand 8a von Schienenfahrzeugen generell nicht im rechten Winkel zu einer Bodenfläche 8b der Kabine des Fahrzeugs ausgebildet ist, sondern mit dieser Bodenfläche 8b verrundet ist. Mit anderen Worten ist zwischen Wand 8a und Bodenfläche 8b ein Radius 8c ausgebildet. Dieser Tatsache werden die Ausgestaltung der Montagelaschenelemente 11a, 11b und die Ausgestaltung der gesamten Tragbaugruppe 3 in diesem Beispiel gerecht, indem nämlich die Kontaktflächen 19a, 19b, welche die Montagelaschenelemente 11a, 11b zur Wand ausbilden, nicht parallel zur Höhenrichtung 1z und/ oder zur Längsrichtung 1x der Tragstruktur angeordnet sind, sondern unter Ausbildung eines Winkels zur Höhenrichtung 1z und/ oder zur Längsrichtung 1x. Bevorzugt sind die Kontaktflächen 19a, 19b parallel zueinander und liegen weiter bevorzugt in einer gemeinsamen Ebene.

Wie insbesondere den Figuren 3a bis 3c zu entnehmen ist, ist damit eine Tragstruktur 1 geschaffen, deren Verbindungsabschnitte zur Wand 8a in Höhenrichtung 1z betrachtet ausschließlich unterhalb der Fahrzeugsitze 2a, 2b und auch unterhalb des dritten Tragelements 6 angeordnet sind.

Fig. 3c und Fig. 3d zeigen, dass in Höhenrichtung 1z der Tragstruktur 1 das erste 4 und das zweite Tragelement 5 von unten nach oben sich verbreiternd ausgestaltet sind.

Fig. 9 zeigt einen Querschnitt der Tragstruktur 1 durch die in der links abgebildeten Seitenansicht (- welche der Ansicht gemäß Fig. 3d entspricht -) veranschaulichten Ebene A-A und weist auf die Schweißverbindung 15 zwischen erstem 4 und zweiten Tragelement 5 hin.

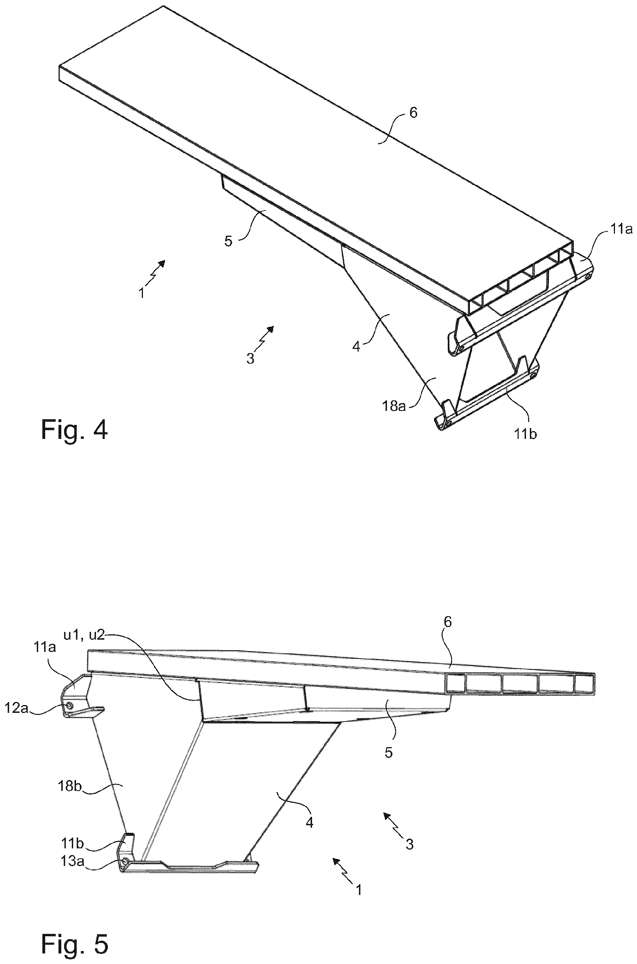

Fig. 4 zeigt eine erste perspektivische Darstellung der Tragstruktur 1 mit erstem Tragelement 4 mit Mantelfläche 18a, zweitem Tragelement 5, drittem Tragelement 6 sowie Montagelaschenelementen 11a, 11b.

Gemäß Fig. 5, die in einer weiteren perspektivischen Darstellung die Tragstruktur 1 aus Fig. 1 ohne Fahrzeugsitze zeigt, ist veranschaulicht, dass zwischen dem ersten 4 und dem zweiten Tragelement 5 ein erster Übergang u1 in Längsrichtung 1x und ein zweiter Übergang u2 in einer Breitenrichtung 1y der Tragstruktur 1 stetig sind. Das bedeutet, dass weder in Längsrichtung 1x noch in Breitenrichtung 1y der Übergang zwischen erstem 4 und zweitem Tragelement 5 durch eine plötzliche Querschnittsänderung gekennzeichnet ist.

Gemäß Fig. 6 ist eine Querschnittsansicht einer bevorzugten Ausführungsform des dritten Tragelements 6 gezeigt, welches vorliegend als zu einer Ebene E2, welche durch eine Höhenrichtung 6z und eine Längsrichtung 6x aufgespannt ist, spiegelsymmetrisches und im Wesentlichen rechteckförmiges Strangpressprofil ausgestaltet ist. Zu sehen ist, dass in einer Breitenrichtung 6y des Profils im Wesentlichen fünf Kammern 20a-20e angeordnet sind, wobei vorliegend die beiden äußersten Kammern 20a, 20e zueinander und die drei inneren Kammern 20b, 20c, 20d zueinander identisch sind (wie sich auch aus der Spiegelsymmetrie ergibt). Es wird daher jeweils nur eine der jeweils zueinander identischen Kammern 20a, 20e und 20b, 20c, 20d beschrieben.

Die Kammer 20a weist eine erste obere Nut 10a auf, welche zur oberen Seite 6z1 des dritten Tragelements 6 hin offen ausgestaltet ist. Die Kammer 20a weist gleichzeitig eine zweite untere Nut 10b auf, welche zur unteren Seite 6z2 des dritten Tragelements 6 hin offen ausgestaltet ist. Die Nuten 10a, 10b sind zueinander identisch ausgestaltet, wobei sie gleichzeitig zueinander bezüglich einer Ebene E3, welche durch die Längsrichtung 6x und die Breitenrichtung 6y aufgespannt ist, spiegelsymmetrisch ausgestaltet sind. Die Nuten 10a, 10b weisen in Breitenrichtung 6y zueinander einen Versatz d6 auf.

Innerhalb der Nut 10a sind vorliegend zwei im Wesentlichen rechteckförmige Vorsprünge 22 (nur einer markiert) an den vertikalen Seitenwänden der Kammer 20a und auf deren halber Höhe angeordnet. An einer der oberen Seite 6z1 gegenüberliegenden Innenfläche der Nut 20a sind auf jeder Seite der Öffnung der Nut 10a zwei im Wesentlichen halbkreisförmige Vorsprünge 23 (nur einer markiert) angeordnet. Die Vorsprünge 22, 23 dienen jeweils zur Führung der zweiten Verbindungselemente 9b und/ oder weiterer Montagelemente.

In Breitenrichtung 6y weist die Kammer 20a neben jeder Nut 10a, 10b eine im Wesentlichen rechteckige Kammer 21a, 21b auf, welche vorliegend zueinander identisch ausgestaltet sind.

Der Abstand der oberen Nuten 10a zueinander in Breitenrichtung 6y ist an die Abmessungen der oftmals standardisierten Fahrzeugsitze 2a, 2b angepasst. Der Abstand der unteren Nuten 10b zueinander in Breitenrichtung 6y ist kleiner als der Abstand der oberen Nuten 10a zueinander in Breitenrichtung 6y. Dadurch kann ebenfalls die Tragbaugruppe 3 in Breitenrichtung 6y kompakter ausgestaltet werden. Ferner ermöglicht der Versatz d6 und die Anordnung der Kammern 21a, 21b, dass durch die entstehenden zusätzlichen Stege in Höhenrichtung 6z (Vertikalstege) die Steifigkeit des Profils erhöht ist.
Die Kammer 20b weist einen im Wesentlichen rechteckförmig ausgestalteten inneren Hohlraum auf und ist ringsum abgeschlossen ausgestaltet, weist also weder zur oberen Seite 6z1 noch zur unteren Seite 6z2 hin eine Öffnung auf. Auch in einer Richtung zu den benachbarten Kammern 20a, 20c hin ist sie abgeschlossen ausgestaltet. Sie ist ebenfalls frei von innen angeordneten Elementen.

Im Folgenden werden vorteilhafte Beispielabmessungen der in der Fig. 6 veranschaulichten Maße des dritten Tragelements 6 genannt. Die Breite B6 weist einen Wert aus einem Bereich von 240 bis 260 mm, bevorzugt von 249,5 mm auf. Die Höhe H6 weist einen Wert aus einem Bereich von 20 bis 40 mm, bevorzugt von 30 mm auf. Die Wandstärke d1 der vertikalen Stege weist einen Wert aus einem Bereich von 2,0 bis 3,0 mm, bevorzugt von 2,5 mm auf. Die Breite d2 der Öffnung der Nut 10b weist einen Wert aus einem Bereich von 3,5 bis 13,5 mm, bevorzugt von 8,5 mm auf. Der Radius d3 der Vorsprünge 23 weist einen Wert aus einem Bereich von 0,5 bis 1,5 mm, bevorzugt von 1,0 mm auf. Die Breite d5 der Kammer 20c weist einen Wert aus einem Bereich von 48 bis 68 mm, bevorzugt von 58 mm auf. Die zweifache Stegdicke d1 und die dreifache Breite d5 ergibt die Abmessung d4, welche bevorzugt einen Wert von 179 mm aufweist. Die Breite d9 der rechteckigen Kammer 21a weist einen Wert aus einem Bereich von 2,5 bis 4,5 mm, bevorzugt von 3,5 mm auf. Die Höhe d7 der rechteckigen Kammer 21a weist einen Wert aus einem Bereich von 10 bis 14 mm, bevorzugt von 12 mm auf. Der Versatz d6 weist einen Wert aus einem Bereich von 3 bis 7 mm, bevorzugt von 5mm auf. Der Abstand d8 von der Symmetrieebene E2 bis zur Mitte der Nut 10a weist einen Wert aus einem Bereich von 100 bis 120 mm, bevorzugt von 109,75 mm auf.

Fig. 7 zeigt einen aus dem Stand der Technik bekannten Biegemomentenverlauf M(x) von einem Biegemoment M über eine Länge x eines Kragträgers mit einer Gesamtlänge L und einer festen Einspannung bei x = x1 =0. Idealisiert angenommen ist, dass eine über die Variable x konstante Streckenlast aufgebracht ist. Diese Randbedingungen lassen sich wie bereits oben erwähnt näherungsweise auf die erfindungsgemäße Tragstruktur übertragen. Zu sehen ist, dass das Biegemoment M einen Maximalwert bei x1 = 0 und einen Wert von M = 0 bei x2 = L aufweist.

Fig. 8 zeigt in zwei Ansichten eines der zweiten Verbindungselemente 9b in Form einer Hammerkopfschraube. In Fig. 3c ist zu sehen, dass das dritte Tragelement 6 mit den Fahrzeugsitzen 2a, 2b auf der oberen Seite 6z1 und mit dem ersten 4 und dem zweiten Tragelement 5 auf der unteren Seite 6z2 jeweils mittels einer lösbaren Verbindung 14a, 14b verbunden ist. Ebenfalls zu sehen sind zwei Hammerkopfschrauben, die diese lösbare Verbindung 14a, 14b bilden, indem sie in die Nuten 10a, 10b des dritten Tragelements 6 eingeführt sind.

### Bezugszeichenliste

- 1: Tragstruktur
- 1x: Längsrichtung
- 1y: Breitenrichtung
- 1z: Höhenrichtung
- 2a, 2b: Fahrzeugsitz
- 3: Tragbaugruppe
- 4, 5, 6: Tragelement
- 4i, 5i: Inneres
- 4u, 5u: untere Seite
- 4z1, 5z1: Richtung
- 6z1, 6z2: Seite
- 8a: Wand
- 8b: Boden
- 8c: Radius
- 9a, 9b: Verbindungselement
- 9aa: Aussparung
- 9al: Lasche
- 9av, 22, 23: Vorsprung
- 10a, 10b: Nut
- 11a, 11b: Montagelaschenelement
- 12a, 12b, 13a, 13b: Montagebohrungen
- 14a, 14b: Verbindung
- 15: Schweißverbindung
- 18a, 18b: Mantelflächen
- 19a, 19b: Kontaktflächen
- 20a-20e, 21a, 21b: Kammer
- B6, d1-d9, H6: Abmessungen
- E1, E2, E3: Ebene
- L: Gesamtlänge
- M: Biegemoment
- M(x): Biegemomentenverlauf
- m1, m2: Steigung
- u1, u2: Übergang
- v4, v5: Verlauf
- x: Länge
- x1, x2: Position
- y1, y2: Gerade

## Patentansprüche

1. Tragstruktur (1) für Fahrzeugsitze (2a, 2b) eines Fahrzeugs, bevorzugt eines Nutzfahrzeugs, zum Befestigen der Fahrzeugsitze (2a, 2b) an einer Wand (8a) einer Kabine des Fahrzeugs, wobei in einer Längsrichtung (1x) der Tragstruktur (1) mindestens ein, bevorzugt mindestens zwei Fahrzeugsitze (2a, 2b) nebeneinander anordenbar sind, wobei die Tragstruktur (1) ein erstes Tragelement (4), welches an der Wand (8a) befestigbar ist, und ein zweites Tragelement (5), welches in der Längsrichtung (1x) der Tragstruktur (1) neben dem ersten Tragelement (4) und starr mit diesem verbunden angeordnet ist, aufweist, **dadurch gekennzeichnet, dass** die Tragstruktur ein drittes schienenartiges Tragelement (6), welches mit dem mindestens einen Fahrzeugsitz (2a, 2b) auf einer oberen Seite (6z1) und mit dem ersten (4) und/ oder dem zweiten Tragelement (5) auf einer unteren Seite (6z2) jeweils mittels einer lösbaren Verbindung (14a, 14b) verbunden ist, aufweist,
wobei das erste (4) und das zweite Tragelement (5) als schalenartige Elemente ausgestaltet sind, welche in einem Inneren (4i, 5i) tragstrukturfrei und in Richtung zum dritten Tragelement (6) hinweisend (4z1, 5z1) offen ausgestaltet sind.

2. Tragstruktur (1) für Fahrzeugsitze (2a, 2b) nach Anspruch 1,
**dadurch gekennzeichnet, dass**
das erste (4) und das zweite Tragelement (5) jeweils ein gekantetes Stahlblechelement, bevorzugt aus einem hochfesten Stahl, und/ oder das dritte Tragelement (6) ein Strangpressprofil, bevorzugt aus einer Aluminiumverbindung, umfassen.

3. Tragstruktur (1) für Fahrzeugsitze (2a, 2b) nach Anspruch 1 oder 2,
**dadurch gekennzeichnet, dass**
das erste (4) und das zweite Tragelement (5) mittels mindestens einer Schweißverbindung (15) und eines ersten Verbindungselements (9a), bevorzugt in Form eines Stahlblechelements, miteinander verbunden sind.

4. Tragstruktur (1) für Fahrzeugsitze (2a, 2b) nach einem der vorherigen Ansprüche,
**dadurch gekennzeichnet, dass**
das erste (4), das zweite (5) und/ oder das dritte Tragelement (6) bezüglich einer Ebene (E1), welche durch die Längsrichtung (1x) und eine Höhenrichtung (1z) der Tragstruktur (1) aufgespannt ist, spiegelsymmetrisch ausgestaltet sind.

5. Tragstruktur (1) für Fahrzeugsitze (2a, 2b) nach einem der vorherigen Ansprüche,
**dadurch gekennzeichnet, dass**
die lösbaren Verbindungen (14a, 14b) des dritten Tragelements (6) jeweils mittels einer Verbindung aus am dritten Tragelement (6) angeordneten Nuten (10a, 10b) und an dem mindestens einen Fahrzeugsitz (2a, 2b) und/ oder dem ersten und zweiten Tragelement (4, 5) angeordneten zweiten Verbindungselementen (9b) ausgestaltet sind.

6. Tragstruktur (1) für Fahrzeugsitze (2a, 2b) nach einem der vorherigen Ansprüche,
**dadurch gekennzeichnet, dass**
in Richtung der Längserstreckung (1x) der Tragstruktur (1) ein Verlauf (v4) einer unteren Seite (4u) des ersten Tragelements (4) zumindest abschnittsweise einem Verlauf einer ersten Gerade (y1) mit einer ersten Steigung (m1) und/ oder ein Verlauf (v5) einer unteren Seite (5u) des zweiten Tragelements (5) einem Verlauf einer zweiten Gerade (y2) mit einer zweiten Steigung (m2) entspricht, wobei die erste Steigung (m1) größer als die zweite Steigung (m2) ist.

7. Tragstruktur (1) für Fahrzeugsitze (2a, 2b) nach einem der Ansprüche 4-6,
**dadurch gekennzeichnet, dass**
in Höhenrichtung (1z) der Tragstruktur (1) das erste (4) und das zweite Tragelement (5) von unten nach oben sich verbreiternd ausgestaltet sind.

8. Tragstruktur (1) für Fahrzeugsitze (2a, 2b) nach Anspruch 6 oder 7,
**dadurch gekennzeichnet, dass**
zwischen dem ersten (4) und dem zweiten Tragelement (5) ein erster Übergang (u1) in Längsrichtung (1x) und/ oder ein zweiter Übergang (u2) in einer Breitenrichtung (1y) der Tragstruktur (1) stetig ausgebildet sind.

9. Tragstruktur (1) für Fahrzeugsitze (2a, 2b) nach einem der vorherigen Ansprüche,
**dadurch gekennzeichnet, dass**
mit dem ersten Tragelement (4) mindestens zwei Montagelaschenelemente (11a, 11b) starr verbunden angeordnet sind, welche mit der Wand (8a) verbindbar sind.

10. Tragstruktur (1) für Fahrzeugsitze (2a, 2b) nach Anspruch 9,
**dadurch gekennzeichnet, dass**
Montagebohrungen (12a, 12b, 13a, 13b) an den Montagelaschenelementen (11a, 11b) in Breitenrichtung (1y) der Tragstruktur (1) außerhalb von Mantelflächen (18a, 18b) des ersten Tragelements (4) angeordnet sind.

## Claims

1. Support structure (1) for vehicle seats (2a, 2b) of a vehicle, preferably of a commercial vehicle, for fastening the vehicle seats (2a, 2b) to a wall (8a) of a cabin of the vehicle, it being possible to arrange at least one, preferably at least two, vehicle seats (2a, 2b) next to one another in a longitudinal direction (1x) of the support structure (1),
the support structure (1) having a first support element (4), which can be fastened to the wall (8a), and
a second support element (5), which is arranged, in the longitudinal direction (1x) of the support structure (1), next to the first support element (4) and is rigidly connected thereto, **characterised in that**
the support structure has a third rail-like support element (6) which is connected to the at least one vehicle seat (2a, 2b) on an upper side (6z1) and to the first support element (4) and/or the second support element (5) on a lower side (6z2), in each case by means of a detachable connection (14a, 14b),
the first support element (4) and the second support element (5) being designed as shell-like elements, which are designed to be free of support structure in an interior (4i, 5i) and open in the direction (4z1, 5z1) pointing towards the third support element (6).

2. Support structure (1) for vehicle seats (2a, 2b) according to claim 1,
**characterised in that**
the first support element (4) and the second support element (5) each comprise a tilted sheet steel element, preferably made of a high-strength steel, and/or the third support element (6) comprises an extruded profile, preferably made of an aluminium compound.

3. Support structure (1) for vehicle seats (2a, 2b) according to either claim 1 or claim 2,
**characterised in that**
the first support element (4) and the second support element (5) are interconnected by means of at least one welded connection (15) and a first connection element (9a), preferably in the form of a sheet steel element.

4. Support structure (1) for vehicle seats (2a, 2b) according to any of the preceding claims,
**characterised in that**
the first support element (4), the second support element (5) and/or the third support element (6) are designed to be mirror symmetric with respect to a plane (E1) which is spanned by the longitudinal direction (1x) and a height direction (1z) of the support structure (1).

5. Support structure (1) for vehicle seats (2a, 2b) according to any of the preceding claims,
**characterised in that**
the detachable connections (14a, 14b) of the third support element (6) are each designed by means of a connection consisting of grooves (10a, 10b) arranged on the third support element (6) and second connection elements (9b) arranged on the at least one vehicle seat (2a, 2b) and/or the first and second support elements (4, 5).

6. Support structure (1) for vehicle seats (2a, 2b) according to any of the preceding claims,
**characterised in that**,
in the direction of the longitudinal extension (1x) of the support structure (1), a path (v4) of a lower side (4u) of the first support element (4) corresponds at least in portions to a path of a first straight line (y1) comprising a first slope (m1) and/or a path (v5) of a lower side (5u) of the second support element (5) corresponds to a path of a second straight line (y2) comprising a second slope (m2), the first slope (m1) being greater than the second slope (m2).

7. Support structure (1) for vehicle seats (2a, 2b) according to any of claims 4-6,
**characterised in that**
the first support element (4) and the second support element (5) are designed to broaden from the bottom to the top in the height direction (1z) of the support structure (1).

8. Support structure (1) for vehicle seats (2a, 2b) according to either claim 6 or claim 7,
**characterised in that**
a first transition (u1) in the longitudinal direction (1x) and/or a second transition (u2) in a width direction (1y) of the support structure (1) are continuously designed between the first support element (4) and the second support element (5).

9. Support structure (1) for vehicle seats (2a, 2b) according to any of the preceding claims,
**characterised in that**
at least two mounting bracket elements (11a, 11b) are rigidly connected to the first support element (4), which mounting bracket elements can be connected to the wall (8a).

10. Support structure (1) for vehicle seats (2a, 2b) according to claim 9,
**characterised in that**
mounting holes (12a, 12b, 13a, 13b) are arranged on the mounting bracket elements (11a, 11b) in the width direction (1y) of the support structure (1) outside lateral surfaces (18a, 18b) of the first support element (4).

## Revendications

1. Structure porteuse (1) pour des sièges de véhicule (2a, 2b) d'un véhicule, de préférence d'un véhicule utilitaire, pour la fixation des sièges de véhicule (2a, 2b) sur une paroi (8a) d'une cabine du véhicule, dans laquelle, dans une direction longitudinale (1x) de la structure porteuse (1), au moins un, de préférence au moins deux sièges de véhicule (2a, 2b), sont aptes à être disposés l'un à côté de l'autre,
la structure porteuse (1) présentant un premier élément porteur (4), lequel est apte à être fixé sur la paroi (8a), et
un deuxième élément porteur (5), lequel est disposé dans la direction longitudinale (1x) de la structure porteuse (1) à côté du premier élément porteur (4) et relié rigidement à celui-ci,
**caractérisée par le fait que**
la structure porteuse présente un troisième élément porteur (6) en forme de rail, lequel est relié avec ledit au moins un siège de véhicule (2a, 2b) sur un côté supérieur (6z1) et avec le premier (4) et/ou le deuxième élément porteur (5) sur un côté inférieur (6z2) respectivement au moyen d'une liaison détachable (14a, 14b),
le premier (4) et le deuxième élément porteur (5) étant conçus en tant qu'éléments en forme de coque, lesquels sont conçus exempts de structure porteuse dans un intérieur (4i, 5i) et ouverts selon l'orientation (4z1, 5z1) en direction du troisième élément porteur (6).

2. Structure porteuse (1) pour des sièges de véhicule (2a, 2b) selon la revendication 1,
**caractérisée par le fait que**
le premier (4) et le deuxième élément porteur (5) comportent chacun un élément de tôle d'acier pliée, de préférence en un acier à haute résistance, et/ou le troisième élément porteur (6) comporte un profilé extrudé, de préférence en un composé d'aluminium.

3. Structure porteuse (1) pour des sièges de véhicule (2a, 2b) selon l'une des revendications 1 ou 2,
**caractérisée par le fait que**
le premier (4) et le deuxième élément porteur (5) sont reliés l'un à l'autre au moyen d'au moins une liaison soudée (15) et d'un premier élément de liaison (9a), de préférence sous forme d'un élément de tôle d'acier.

4. Structure porteuse (1) pour des sièges de véhicule (2a, 2b) selon l'une des revendications précédentes,
**caractérisée par le fait que**
le premier (4), le deuxième (5) et/ou le troisième élément porteur (6) sont conçus suivant une symétrie spéculaire par rapport à un plan (E1), lequel est défini par la direction longitudinale (1x) et une direction verticale (1z) de la structure porteuse (1).

5. Structure porteuse (1) pour des sièges de véhicule (2a, 2b) selon l'une des revendications précédentes,
**caractérisée par le fait que**
les liaisons détachables (14a, 14b) du troisième élément porteur (6) sont conçues respectivement au moyen d'une liaison faite de rainures (10a, 10b) disposées sur le troisième élément porteur (6) et de seconds éléments de liaison (9b) disposés sur ledit au moins un siège de véhicule (2a, 2b) et/ou sur le premier et le second élément porteur (4, 5).

6. Structure porteuse (1) pour des sièges de véhicule (2a, 2b) selon l'une des revendications précédentes,
**caractérisée par le fait que**
dans la direction de l'étendue longitudinale (1x) de la structure porteuse (1), un tracé (v4) d'un côté inférieur (4u) du premier élément porteur (4) correspond au moins par sections à un tracé d'une première droite (y1) ayant une première pente (m1) et/ou un tracé (v5) d'un côté inférieur (5u) du deuxième élément porteur (5) correspond à un tracé d'une deuxième droite (y2) ayant une deuxième pente (m2), la première pente (m1) étant plus grande que la deuxième pente (m2).

7. Structure porteuse (1) pour des sièges de véhicule (2a, 2b) selon l'une des revendications 4-6,
**caractérisée par le fait que**
dans la direction verticale (1z) de la structure porteuse (1), le premier (4) et le deuxième élément porteur (5) sont conçus en s'élargissant du bas vers le haut.

8. Structure porteuse (1) pour des sièges de véhicule (2a, 2b) selon l'une des revendications 6 ou 7,
**caractérisée par le fait que**
entre le premier (4) et le deuxième élément porteur (5), une première transition (u1) est réalisée de façon continue dans la direction longitudinale (1x) et/ou une deuxième transition (u2) est réalisée de façon continue dans une direction transversale (1y) de la structure porteuse (1).

9. Structure porteuse (1) pour des sièges de véhicule (2a, 2b) selon l'une des revendications précédentes,
**caractérisée par le fait que**
au moins deux éléments de patte de montage (11a, 11b) sont disposés reliés de façon rigide au premier élément porteur (4), lesquels sont aptes à être reliés à la paroi (8a).

10. Structure porteuse (1) pour des sièges de véhicule (2a, 2b) selon la revendication 9,
**caractérisée par le fait que**
des trous de montage (12a, 12b, 13a, 13b) sont disposés sur les éléments de patte de montage (11a, 11b) dans la direction transversale (1y) de la structure porteuse (1) à l'extérieur de surfaces d'enveloppe (18a, 18b) du premier élément porteur (4).
